# FASCICULE DE BREVET EUROPEEN

(11) **EP 0 702 810 B1**
(45) Date de publication et mention de la délivrance du brevet: **15.12.1999**
(21) Numéro de dépôt: 95917385.7
(22) Date de dépôt: 12.04.1995
(51) Int. Cl.: G06F 3/023

(54) **SYSTEME ET PROCEDE DE DIALOGUE INTERACTIF ENTRE UN UTILISATEUR ET UN SERVEUR TELEMATIQUE**
SYSTEM UND VERFAHREN ZUM INTERAKTIVEN DIALOG ZWISCHEN EINEM BENUTZER UND EINEM TELEMATISCHEN SERVER
SYSTEM AND METHOD FOR INTERACTIVE DIALOGUE BETWEEN A USER AND A TELEMATIC SERVER

(30) Priorité: 12.04.1994 FR 9404329
(43) Date de publication de la demande: 27.03.1996
(73) Titulaire: Metalogic, 75008 Paris (FR)
(72) Inventeur: MORGAINE, Sylvain, F-75006 Paris (FR)
(74) Mandataire: Benech, Frédéric
(86) Numéro de dépôt international: FR9500476
(87) Numéro de publication internationale: WO9527934

(56) Documents cités:
- EP-A- 0 326 751
- WO-A-89/05023
- WO-A-93/10605
- DE-A- 4 113 542

## Description

La présente invention concerne un système de dialogue interactif entre un utilisateur et un serveur télématique, comprenant un dispositif d'interface propre à être connecté au serveur via le réseau téléphonique.

Elle concerne également un procédé de dialogue interactif mettant notamment en oeuvre un tel système.

Elle trouve une application particulièrement importante, bien que non exclusive, dans le domaine des dialogues interactifs entre un utilisateur et un serveur fournissant et/ou captant des informations cohérentes avec une émission radiodiffusée ou télédiffusée.

On connaît déjà des dispositifs de dialogue en interactif avec un serveur par exemple via un combiné téléphonique, ou via un modem connecté à un micro-ordinateur.

Ces dispositifs nécessitent en général la présence de l'utilisateur directement à proximité de la connexion du dispositif d'interface avec le réseau.

Certes, un appareil de télécommande à distance du dispositif interface permettant de dialoguer avec le serveur pourrait être prévu pour palier cet inconvénient. Une telle disposition nécessite cependant une programmation spécifique de l'appareil de télécommande qui doit être configuré pour pouvoir capter et réémettre des informations en correspondance avec des schémas de fonctionnement préétablis.

Il s'ensuit une grande rigidité d'utilisation.

En effet, même si de nombreuses fonctions différentes sont programmées dans l'appareil, il n'en reste pas moins vrai que leur nombre est nécessairement fini.

On connaît également (WO-A-8905023) un système de stockage et d'interrogation de base de données comprenant un micro-ordinateur et un livre simulé.

La base de données est stockée sur un disque CD ROM connecté à l'ordinateur, le livre simulé étant relié à la base par rayonnement infrarouge et comportant un écran d'affichage à cristaux liquides qui peut être agencé pour permettre une commande tactile pré-programmée.

Une telle programmation est cependant préalablement effectuée et stockée dans la mémoire ROM du livre simulé alors que les données du CD sont stockées dans la mémoire RAM et il est nul part décrit ni suggéré l'idée de moyens permettant d'envoyer des instructions de commandes à partir de moyens transmetteurs connectés au CD ROM.

Un tel système est donc limité aux applications pour lesquelles le livre simulé a été programmé au préalable.

La présente invention vise à fournir un système et un procédé de dialogue interactif entre un utilisateur et un serveur télématique répondant mieux que ceux antérieurement connu aux exigences de la pratique, notamment en ce qu'elle propose un dialogue interactif entre le serveur et l'utilisateur avec affichage de messages écrits ou graphiques sur l'écran d'un appareil portable et actionnable par l'utilisateur, messages qui sont programmables et reconfigurables en temps réel, permettant ainsi de réaliser un nombre de fonctions illimitées.

Pour ce faire, l'invention propose un appareil de télécommande sans fonctionnalité prédéfinie.

C'est une source extérieure située entièrement à distance de l'utilisateur, en l'occurrence le serveur et/ou le dispositif d'interface, qui d'une part, transmet à l'appareil les fonctions de traitement des données en même temps que ces dernières, et d'autre part, traite en retour les données transmises par l'utilisateur.

La programmabilité de l'affichage autorise ainsi des présentations d'écrans différents, adaptées au type d'interactivité recherchée, la reconfiguration en temps réel des écrans permettant quant à elle la modification de l'affichage en continu au fur et à mesure du déroulement de l'interaction.

Dans la mesure ou tout ce qui est stockable et traitable constitue une donnée, et afin de mieux cerner l'invention, on distinguera pour la suite, quand nécessaire, les données brutes (data en terminologie anglo-saxonne) et les instructions de commande, ou les fonctions, de traitement de données brutes, qui sont des programmes.

Dans le but indiqué ci-dessus, l'invention propose donc essentiellement un système de dialogue interactif entre un utilisateur et un ensemble de stockage de données brutes, comprenant un dispositif d'interface propre à être connecté audit ensemble, ledit dispositif comportant :
- des moyens de stockage et de traitement des données brutes transmises par l'ensemble,
- des moyens d'émission de signaux infrarouges ou de signaux radioélectriques à faible distance en fonction desdites données brutes transmises par l'ensemble et traitées par le dispositif,
- des moyens de réception de signaux infrarouges ou de signaux radioélectriques,
- des moyens de traitement des signaux recus,
- et des moyens de transmission des données correspondantes aux signaux ainsi traités vers ledit ensemble,
le système comprenant de plus un appareil de télécommande portable comportant :
- des moyens de réception et d'émission de signaux infrarouges ou de signaux radioélectriques à faible distance,
- des moyens de stockage en mémoire à lecture/écriture des données correspondantes aux signaux émis par le dispositif et recus par l'appareil,
- des moyens d'affichage de messages comportant un écran, lesdits moyens d'affichage étant agencés pour représenter en temps réel, à des emplacements déterminés de l'écran, lesdites données correspondant aux signaux émis par le dispositif,
- et des moyens de commande manuelle par l'utilisateur de l'émission de signaux infrarouges ou radioélectriques en retour, comprenant une plaque tactile superposée à l'écran, agencée pour commander l'émission desdits signaux en retour par pression sur ladite plaque tactile à des emplacements déterminés et correspondant au message affiché,
caractérisé
en ce que l'ensemble de stockage de données appartient à au moins un serveur télématique,
en ce que l'appareil comporte un boîtier de dimension réduite,
en ce que les moyens d'émission de signaux du dispositif sont agencés pour transmettre des instructions de commande à l'appareil, les moyens de stockage en mémoire à lecture/écriture de l'appareil étant agencés pour stocker lesdites instructions de commande,
et en ce que les moyens d'affichage de messages sont propres à représenter en temps réel, à des emplacements de l'écran déterminés par le dispositif, les messages issus desdites instructions de commande, et desdites données stockées dans ladite mémoire à lecture/écriture.

Par faible distance, on entend par exemple une distance inférieure à 20m, et notamment inférieure à 10m, voir 5m.

Par boîtier de dimension réduite on entend un boîtier par exemple ovale ou parallelépipédique sensiblement de la dimension d'une main, par exemple de 15 cm sur 8 cm.

Dans des modes de réalisation avantageux, on a de plus recours à l'une et/ou à l'autre des dispositions suivantes :
- l'appareil comporte un écran à cristaux liquides ;
- la mémoire à lecture/écriture est une mémoire RAM ;
- le système comporte des moyens d'interface vocale ;
- les signaux sont des signaux infrarouges ;
- l'appareil comporte de plus des moyens de stockage permanent, du type EEPROM, de fonctions propres à commander un lecteur interactif, un magnétoscope, un appareil de télévision, une chaîne haute fidélité, un appareil ménager ou équivalent.

Un lecteur interactif est par exemple un lecteur désigné sous les dénominations CDI, Photo CD et Vidéo CD, etc.

L'invention propose également un procédé de dialogue interactif entre un utilisateur et un ensemble de stockage de premières données brutes, dans lequel on stocke et on traite les premières données brutes transmises par ledit ensemble dans un dispositif d'interface connecté audit ensemble, et on transmet à l'ensemble, en réponse, des deuxièmes données brutes et/ou des instructions de commande venant de l'utilisateur, caractérisé en ce que l'ensemble de stockage des premières données brutes appartenant à un serveur, on télécharge à distance à partir dudit dispositif, par rayonnements infrarouges ou ondes radioélectriques, un appareil de télécommande portable, muni d'un boîtier de dimension réduite et actionnable par l'utilisateur, en transmettant en même temps à l'appareil les premières données brutes traitées par le dispositif et des instructions de commande pour traitement desdites premières données brutes traitées par le dispositif, on affiche automatiquement sur l'appareil, en temps réel, ou en temps différé via un stockage tampon dans l'appareil, et en fonction desdites instructions de commande téléchargées, des messages correspondants auxdites données et auxdites instructions de commande,
on commande manuellement à partir de l'appareil l'émission de signaux infrarouges ou radioélectriques
en réponse en appuyant à des emplacements dudit appareil déterminés par le dispositif et correspondants aux messages affichés.

Lesdits signaux reçus dans le dispositif, émis à partir de l'appareil, peuvent être traités avant de transmettre les informations correspondantes aux signaux ainsi traités vers le serveur

Par transmission en même temps des premières données brutes et des instructions de commande, on entend essentiellement une transmission simultanée, mais aussi une transmission sensiblement simultanée c'est à dire l'une après l'autre dans un temps court, par exemple de l'ordre de la seconde.

Par affichage automatique de messages, on entend aussi l'adressage automatique ou l'affectation automatique d'une fonction déterminée à une touche existante sur un clavier substitué ou adjoint à un écran d'inscription de messages.

L'invention sera mieux comprise à la lecture de la description qui suit d'un mode de réalisation, donnée à titre non limitatif.

La description se réfère aux àessins qui l'accompagnent dans lesquels :
- La figure 1 est un schéma général d'un premier mode de réalisation du système selon l'invention.
- La figure 2 est un schéma bloc du dispositif d'interface selon un mode de réalisation de l'invention.
- La figure 3 est un schéma bloc de l'appareil de télécommande selon le mode de réalisation de l'invention correspondant au dispositif de la figure 2.
- La figure 4 est un schéma d'un second mode de réalisation du système selon l'invention.
- La figure 5 est un organigramme simplifié du protocole de communication ente le dispositif d'interface et l'appareil de télécommande, selon le mode de réalisation de l'invention plus particulièrement décrit ici.
- Les figures 6a à 6f montrent schématiquement un exemple de fonctionnement du système selon l'invention.

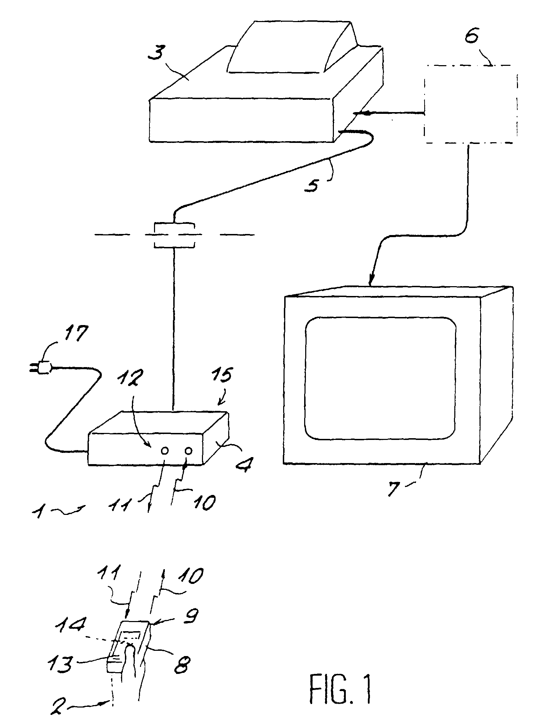

La figure 1 montre un système 1 de dialogue interactif entre un utilisateur 2 et un serveur télématique 3.

Le système 1 comprend un dispositif 4 d'interface propre à être connecté au serveur 3 via le réseau téléphonique 5.

Dans le mode de réalisation représenté sur la figure 1, le serveur est lui-même connecté à des moyens 6 gérant en temps réel une interface avec une émission de télévision retransmise sur l'écran du poste de télévision 7 placé en face de l'utilisateur 2.

Le système 1 comprend un appareil de télécommande portable 8 comportant des moyens 9 agencés pour émettre et recevoir des rayonnements infrarouges, respectivement 10 et 11, de communication avec le dispositif 4 également équipé en conséquence des moyens 12 d'émission et de réception de rayonnements infrarouges.

L'appareil de télécommande 8 comporte une plaque tactile 13 superposée à un écran 14 à cristaux liquides (en trait interrompu sur la figure).

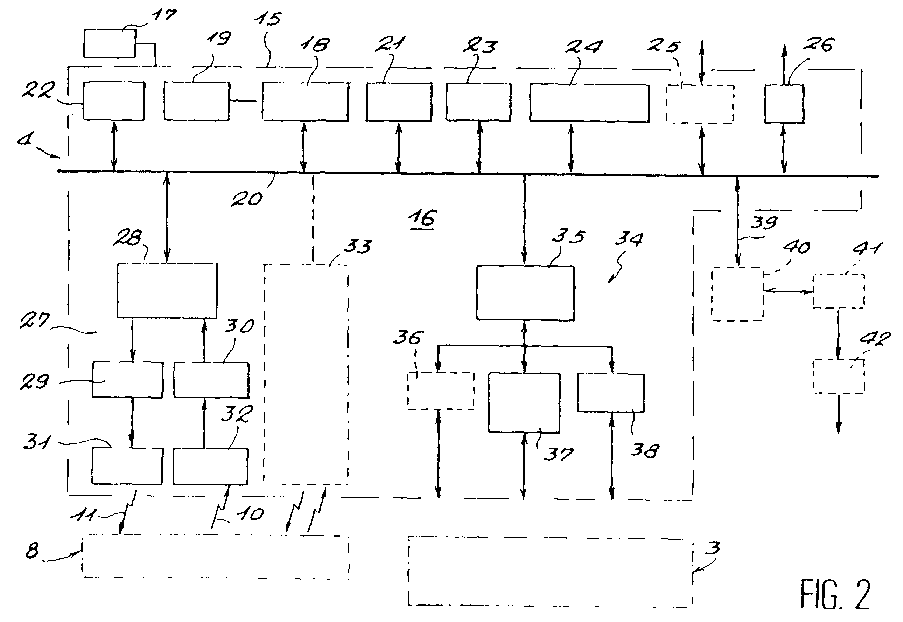

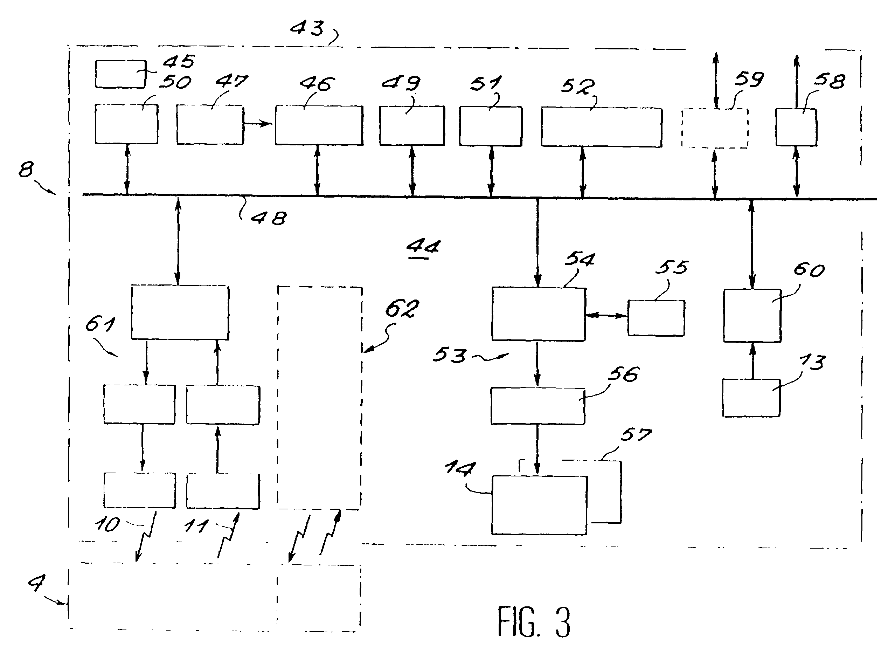

Le système va maintenant être détaillé en référence aux figures 2 et 3.

Les mêmes numéros de références seront utilisés dans la suite de la descripion pour désigner les mêmes éléments que ceux déjà indiqués.

Le dispositif 4 comporte un boîtier 15 (en trait mixte sur la figure 2) dans lequel est placé un circuit électronique 16 constitué par une ou plusieurs cartes électroniques alimentées en puissance par le secteur 17.

Le circuit électronique 16 comporte un microprocesseur 18, par exemple un microprocesseur de type connu, synchronisé par une horloge 19.

Le microprocesseur 18 est par ailleurs raccordé via un bus 20 (données et contrôle) à une mémoire RAM 21, par exemple de 2 Méga-octets, dans laquelle sont inscrites les données à émettre vers l'appareil 8 de télécommande et les données téléchargées depuis le serveur télématique.

Le circuit 16 comporte une horloge calendaire 22 agencée pour être mise à jour depuis le serveur 3 et permettant la synchronisation avec l'appareil 8.

Le circuit 16 comprend également, connectés au bus 20, une mémoire EEPROM 23 de stockage d'instructions pré-programmées, une mémoire lecture/écriture 24, du type RAM, EEPROM, ou Flash EPROM, agencée pour stocker une configuration d'instructions ou de fonctionnement déterminée par téléchargement à partir du serveur.

Le circuit 16 comprend également, mais de facon nullement impérative, un circuit d'interface 25 pour carte à mémoire (en trait interrompu sur la figure 2) ainsi qu'un circuit d'interface 26 entrée/sortie pour la signalisation et la mise sous tension du dispositif.

Des moyens 27 d'émission et de réception de signaux infrarouges sont par ailleurs prévus. Ils sont connus en eux-mêmes et comprennent un circuit 28 dit sérialiseur/ désérialiseur, agencé pour gérer et décoder les signaux émis et recus après passage respectif de ces derniers sur modulateur 29 et un démodulateur 30, eux-mêmes respectivement connectés à un circuit 31 émetteur de signaux infrarouges et à un circuit 32 récepteur de signaux infrarouges, lesdits circuits comprenant respectivement des diodes, à savoir une diode émettrice de rayonnements infrarouges 11, et un récepteur optique sensible aux rayonnements infrarouges 10.

Dans un autre mode de réalisation, le dispositif 4 comporte des moyens 33 (en trait interrompu sur la figure 2) d'émission et de réception d'ondes radioélectriques à courte portée. Ici encore ces moyens sont connus en eux-mêmes. Ils permettent le dialogue avec l'appareil 8 alors équipé de moyens similaires, de façon symétrique. Ces moyens 33 comportent notamment un circuit convertisseur, d'interface avec le microprocesseur 18, agencé pour traiter les signaux à l'émission et à la réception.

Le dispositif 4 comporte également un circuit 34 de connexion avec le réseau télématique lui-même raccordé au serveur 3.

Le circuit 34 comporte un circuit 35 dit sérialiseur/désérialiseur (USART en initiales anglo-saxonnes) lui-même connecté à un circuit 36 d'interface radio, et/ou à un modem 37 d'interface avec le réseau téléphonique RNIS, RTC ou autre, et à une prise 38, normée, du type RS232 ou RS422, de connexion avec un appareil externe tel qu'un micro-ordinateur par exemple.

Enfin, le dispositif 4 comporte par exemple des moyens 39 de connexion avec un circuit d'interface graphique 40 relié à des moyens 41 de mémoire d'écran, eux-mêmes connectés à un circuit 42 d'interface vidéo, connu en lui-même.

La figure 3 est un schéma bloc de l'appareil 8 de télécommande de la figure 1.

Il comporte un boîtier 43 portable et ergonomique, par exemple rectangulaire et en matière plastique.

Le boîtier 43 contient un circuit électronique 44 de télécommande, alimenté électriquement par une batterie 45 et comprenant un microprocesseur 46 cadencé par une horloge 47, et connecté via un bus 48, à une mémoire RAM 49 agencée pour stocker les données à émettre vers le dispositif 4 et les données à conserver localement (permettant par exemple une personnalisation de l'appareil, etc.), à une horloge calendaire 50 qui autorise notamment la gestion en différé, et à une mémoire EEPROM 51, de stockage d'instructions de fonctionnement de l'appareil en local, du type BIOS, gérant par exemple le fonctionnement des cellules tactiles de la plaque tactile.

Selon l'invention, le circuit comprend également une mémoire 52, du type RAM ou EEPROM, par exemple de 512 Koctets, de stockage en temps réel des données et des instructions reçues du dispositif, agencée pour afficher lesdites données selon la configuration d'instructions directement émises par le dispositif 4, sur des moyens 53 d'affichage.

Les moyens 53 comprennent de façon connue en elle-même un circuit 54 d'interface graphique et numérique avec mémoire d'écran 55 raccordé au bus 48 et connecté à un circuit 56 d'interface avec l'écran à cristaux liquides 14 muni d'un plaque de rétro-éclairage 57.

Il s'agit, par exemple d'un écran conçu par la Société SHARP.

De façon identique au dispositif 4, l'appareil 8 comporte, connecté au bus, un circuit d'entrée/sortie 58 (contacteur, voyants), et peut comporter, de façon nullement impérative, un circuit 59 d'interface avec une carte à mémoire.

Selon l'invention, l'appareil comprend par ailleurs une plaque tactile 13 placée sur l'écran à cristaux liquides et connectée au bus 48 via un circuit 60 d'interface tactile connu en lui-même.

Une plaque tactile utilisable avec l'invention est par exemple une plaque du type fabriquée par la Société américaine IDT et vendue sous la référence AXXESS 1001.

Enfin de façon symétrique et identique aux moyens 27 et/ou 33 du dispositif, l'appareil comprend des moyens 61 d'émission et de réception de signaux infrarouges, et/ou des moyens 62 d'émission et de réception des signaux radio-électrique, qui ne seront donc pas détaillés plus avant.

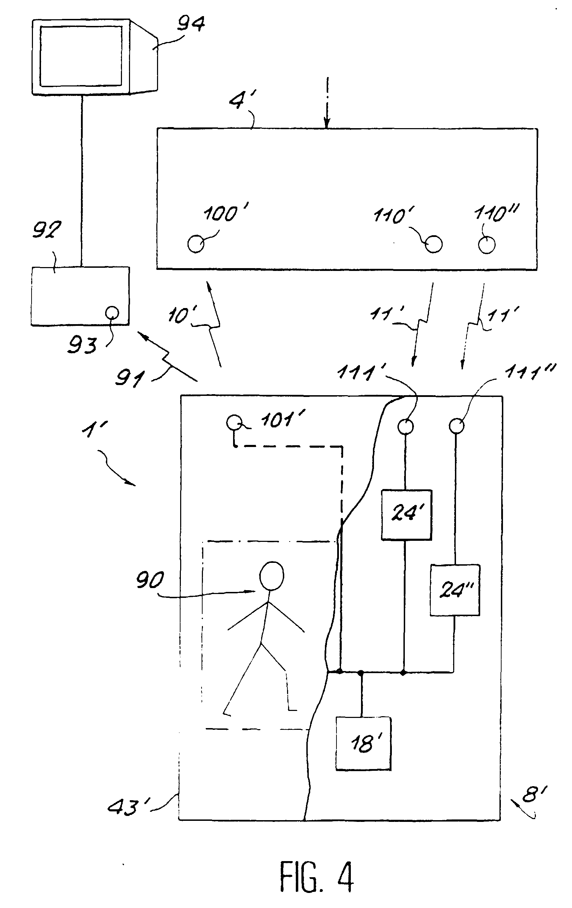

La figure 4 montre un autre mode de réalisation d'un système 1' selon l'invention.

Ici, pour permettre une communication temps-réel ou sensiblement temps réel entre le dispositif 4' d'interface (connecté au serveur) et l'appareil 8' de télécommande, les données brutes 11' et les instructions de commande 11" sont transmises audit appareil 8' de télécommande au moyen de deux émetteurs infrarouges spécialisés 110' et 110".

Plus précisément, il s'agit d'un premier émetteur 110' dédié à la communication des données brutes (données d'affichage) dont la vitesse de transmission est au minimum égal à 28.8 Kbauds, et d'un second émetteur 110" dédié à la communication des instructions de commandes (programme) dont la vitesse est également au minimum de 28.8 Kbauds.

Une telle disposition assure une transmission de façon rapide et fiable pour que l'utilisateur puisse faire une sélection en synchronisation avec les choix qui lui sont proposés.

Après démodulation des données envoyées par le/les serveur(s), le microprocesseur du dispositif 4' d'interface trie et envoie les données brutes 11' vers le premier émetteur et les instructions de commandes vers le second émetteur.

Les longueurs d'ondes des deux émetteurs infrarouges sont différentes pour éviter toute interférence pendant l'émission simultanée des deux flux de données.

L'appareil 8' comprend quant à lui deux récepteurs optiques 111' et 111" sensibles aux rayonnements infrarouges, chacun connecté à une mémoire RAM 24', 24'' indépendantes, raccordées au bus 48' lui même connecté au microprocesseur 18', etc., le tout permettant de faire apparaître l'icône 90 et de transmettre via la diode émettrice 101', le signal infrarouge 10' vers le dispositif et son capteur 100', ou le signal infrarouge 91 vers un appareil 92, par exemple un lecteur CD ROM, muni d'un capteur 93.

L'appareil peut être connecté ici encore au poste de télévision 94, une telle télécommande permettant par exemple de désinhiber un programme vidéo préenregistré sur un disque CD ROM transmis préalablement à l'utilisateur, lors d'instructions données à un moment déterminé par le serveur.

Le mode de transmission parallèle ne doit pas obligatoirement séparer les signaux d'affichage des instructions de commandes.

En effet, on peut considérer que pour accélérer le téléchargement d'un programme, les deux émetteurs sont utilisés.

De même, certaines applications peuvent nécessiter une vitesse d'affichage plus rapide rendue possible par l'utilisation parallèle des émetteurs.

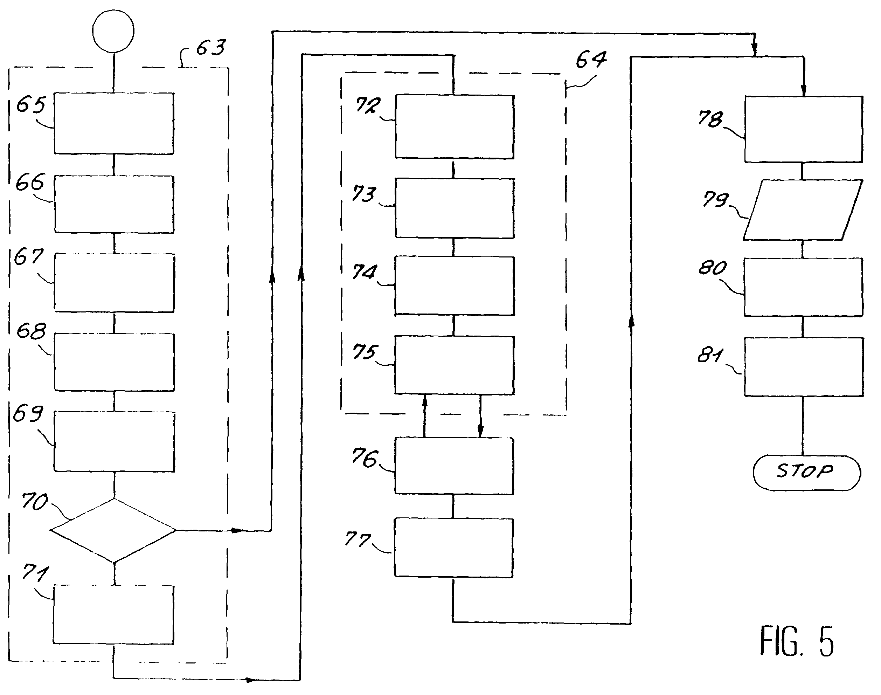

La figure 5 est un organigramme simplifié donnant les principales etapes du protocole de connexion entre le dispositif 4 et l'appareil 8 selon le mode de réalisation de l'invention plus particulièrement décrit ici.

Il comporte une première étape 63 dite étape de requête de données de télécommande, une deuxième étape 64 dite étape d'actionnement du modem 37, et les étapes de dialogue proprement dites.

Les deux premières étapes 63 et 64 (en trait interrompu sur la figure 4) comprennent les sous-étapes suivantes.
Etape 63 (Requête de données de télécommande) :
- (65) :: Mise sous tension de la télécommande.
- (66) :: Envoi du code "PRET A RECEVOIR" au dispositif d'interface 4.
Si au bout de 2 secondes, le dispositif 4 ne répond pas alors la télécommande affiche par exemple un message d'erreur de transmission.
- (67) :: Envoi des options de connexion à l'appareil de la télécommande 8.
- (68) :: Sélection d'une option de connexion sur l'appareil de la télécommande 8.
- (69) :: Envoi de l'option au dispositif d'interface 4.
- (70) :: sélection de l'Option serveur, c'est-à-dire de la connexion ou non à un circuit modem 37. Si la réponse est non la télécommande reste en mode local et va directement à l'étape (78).
- (71) :: Adressage dans la table de numérotation (voir ci-après).
Etape 64 (Actionnement du modem) :
- (72) :: Prise de la ligne téléphonique.
- (73) :: Composition du numéro de téléphone.
- (74) :: Détection de la fréquence porteuse.
- (75) :: Connexion du dispositif 4 au serveur 3.

Les étapes de dialogue en interactif entre l'utilisateur et le serveur sont ensuite effectuées.

Il s'agit des étapes suivantes :
- (76) :: Requête et réception de données entre le dispositif 4 et le serveur 3.
- (77) :: Vérification et tri des données.
- (78) :: Chargement et codage des données en mémoire 23 et 24 du dispositif 4.
- (79) :: Envoi vers l'appareil de télécommande 3 des codes d'affichage, de la position des messages sur l'écran et des paramètres de programmation.
- (80) :: Actionnement de l'écran tactile par l'utilisateur.
- (81) :: Envoi vers le dispositif du code de validation de réception des données.

Le protocole de communication selon le mode de réalisation de l'invention, plus particulièrement décrit ici, va maintenant être détaillé ci-après. Il est donné de façon non limitative.

Comme on l'a vu, le dispositif 4 reçoit des informations d'un site distant par l'intermédiaire d'un modem intégré. Ces informations peuvent être téléchargées, de façon programmée ou bien à la demande de l'utilisateur via la télécommande.

Pour ce faire, on crée 4 tables dans les mémoires 23 et 24 du dispositif 4 :
- 1 table de codage (Table 1)
- 1 table de programmation (Table 2)
- 1 table de numérotation (Table 3)
- 1 table dite de scripts de connexion (Table 4).

La table de codage dans le dispositif (4) est similaire à la table d'affichage dans l'appareil de télécommande.

Elle a pour but de traduire les caractères en provenance du serveur disposé dans un site distant dans leurs coordonnées tabulaires.

Par exemple, si le caractère "I" est lu, il est traduit en 12, "J" en 22, etc...

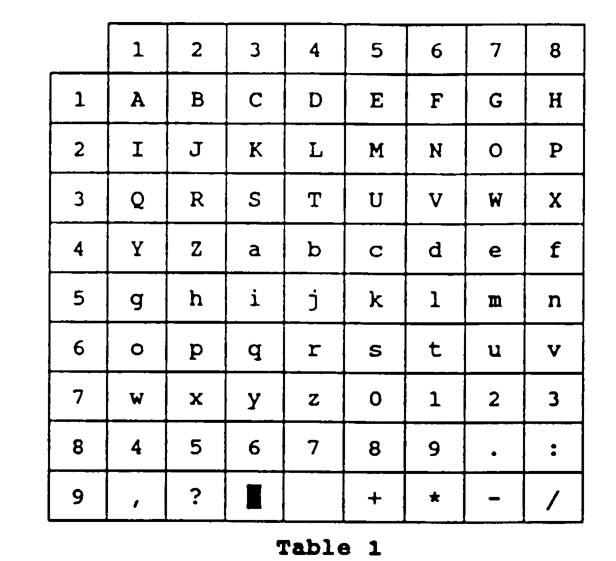

La table de programmation (Table 2) indique au dispositif 4 les actions à effectuer lorsque l'utilisateur a sélectionné une information sur la plaque tactile de l'appareil de télécommande.

Cette table est composée de 3 colonnes. Selon l'invention, elle est dynamique, c'est-à-dire qu'elle se remplit et se vide en fonction des informations qui sont communiquées vers et depuis l'appareil de télécommande.

La 1ère colonne donne la position en X,Y de la cellule de l'écran tactile sélectionnée par l'utilisateur.

La 2ème colonne donne le code de fonctionnement du dispositif ou code d'action.

Le code d'action peut par exemple avoir plusieurs valeurs :
- "3":: l'action est locale entre le dispositif 4 et la télécommande ;
- "4":: l'action est transmise au serveur d'information via un réseau téléphonique.

La 3ème colonne définit l'action à effectuer.

Cette action est par exemple définie par un code de 2 lettres correspondant aux différentes fonctions à exécuter.
En utilisant la représentation symbolique suivante :
<...> : paramètres obligatoires
(<...>) : paramètres optionnels
on prévoit par exemple les fonctions suivantes :
- "SR" <chaîne de caractères>, <code d'action télécommande>, (<x,y>)
envoi d'une chaîne de caractères à l'appareil 8 de télécommande
- "CX" <nom du serveur distant>
connexion par modem au serveur
- "SD" <chaîne de caractères>
envoi d'une chaîne de caractères au serveur 3 situé à distance
- "RD"
réception d'une chaîne de caractères du serveur 3
- "CL" (<x1 y1 y2 y2>)
effacement total ou partiel de la zone d'affichage sur l'appareil de télécommande ; suppression totale ou indexée dans la table de commande
etc...

La table 2 se présente donc sous la forme suivante :

**Table 2**

| POSITION | CODE D'ACTION BOITIER | ACTION |
|---|---|---|
| 10 20 | 3 | SR("VALIDER",1,40,30) |
| 40 30 | 4 | RD |
| 110 30 | 4 | SD "OK" |
| 130 130 | 3 | CL |
| ... | ... | ... |

Une description plus précise des actions ou fonctions SR, CL, SD et RD est donnée ci-après.

### Fonction SR (Send Remote)

Elle consiste à codifier la chaîne de caractères par la table de codage
ex: "VALIDER" => "63 11 42 12 41 51 23"

Pour ce faire la fonction SR effectue les opérations suivantes :
- construire la commande à envoyer à l'appareil de télécommande
   ex: "VALIDER",1,40,30"
   => "10 1 40 30 63 11 12 12 41 51 23"
- envoyer la commande
- ajouter l'entrée correspondante dans la table de programmation.

### Fonction CX (Connect)

Dans cette fonction on exécute le programme dit de script de connexion avec le serveur du réseau, via la table de numérotation (Table 3), qui sera décrite plus loin.
ex: CX "minitel"

### Fonction SD (Send Data)

Elle permet d'envoyer la chaîne de caractères et est suivie d'un retour chariot
ex: "OK" <rc>

### Fonction RD (Receive Data)

Cette fonction permet la réception d'une chaîne de caractères.
ex: "SOUHAITEZ VOUS CONTINUER?"
Elle codifie, par ailleurs, la chaîne de caractères par la table de codage (Table 1).

La table de numérotation (Table 3) va maintenant être décrite. Elle indique au dispositif 4 les paramètres de communication à utiliser ainsi que le script à exécuter dans la table de scripts de connexion (Table 4, ci-après).

La table 3 est composée de 8 colonnes à savoir :
- colonne 1 : nom du serveur
- colonne 2 à 3: composition du numéro de connexion
- colonne 4 à 8: paramètres de communication

**Table 3**

| NOM DU SERVEUR | prefix | NUMERO DE TEL | baud | bits | par | stop | script |
|---|---|---|---|---|---|---|---|
| minitel | - | 11 | 1200 | 7 | 0 | 1 | 1 |
| | | | | | | | |

La table de scripts de connexion permet quant à elle d'exécuter une série de commandes pour automatiser le processus de connexion.

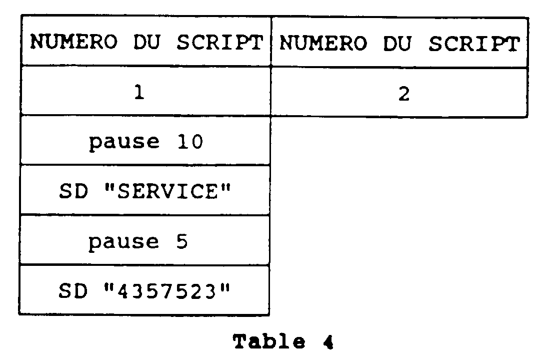

Pour dialoguer entre eux dans le mode de réalisation plus particulièrement décrit ici, le dispositif et l'appareil utilisent un protocole de codage des signaux infrarouges.

Le protocole utilisé pour transmettre les données est de type connu.

Par ailleurs, un protocole utilisé pour transmettre les instructions de commande selon le mode de réalisation de l'invention plus particulièrement décrit, est donné ci-après.

### Protocole de codage des signaux infrarouges correspondant aux instructions de commande :

Les signaux infrarouges sont par exemple codés en hexadécimal.

La chaîne de caractères transmise du dispositif d'interface avec le serveur de l'appareil de télécommande est alors structurée en plusieurs parties :
Le premier octet définit la longueur totale de la chaîne de caractères ;
Le deuxième octet définir le type de données infrarouges à émettre :
   "1" : émission d'une instruction de commande dispositif
   "2" : émission d'un code infrarouge hors-dispositif.

On entend par "instruction de commande dispositif", la codification des commandes envoyées par le dispositif à l'appareil de télécommande qui dans le cas d'une requête interactive peuvent être elles-mêmes renvoyées au dispositif lorsque l'utilisateur sélectionne la zone tactile correspondante.

On entend par "code infrarouge hors-dispositif", la codification d'un signal infrarouge envoyé par le dispositif à l'appareil de télécommande qui sera lui-même renvoyé à l'appareil domestique susceptible de l'interpréter (lecteur interactif, magnétoscope, TV, etc.).

Dans le cas d'instructions de commande dispositif, les octets suivants sont par exemple codés de la facon suivante :
Le troisième octet détermine l'index dans la table de commande (table 6) ;
Le quatrième octet détermine le code d'action télécommande (table 6) ;

Dans le cas d'un code d'action "1" les quatre octets suivants définissent l'étendue de la zone tactile associée (table 7) et les octets restants déterminent la commande émise (table 6).

Dans le cas de codes infrarouges hors-dispositif, les octets suivants sont quant à eux et par exemple codés de la façon suivante :
Le troisième octet détermine l'index dans la table de commande (table 6) ;
Le quatrième octet détermine le code d'action télécommande (table 6) ;
Le code d'action est égal à "2" ;
Le cinquième octet définit la longueur de la chaîne de caractères ; les octets suivants définissent le signai infrarouge (IR).

Les octets définissant le signal IR sont par ailleurs codés de la facon suivante :
· Le premier groupe de 4 bits détermine le nombre d'impulsions IR à émettre par pas de N millisecondes, N pouvant varier selon le type de télécommande à émuler.
· Le second groupe de 4 bits détermine le temps de latence entre l'octet en question et le suivant. Ceux-ci ont un pas de M millisecondes. N peut être égal ou non à M.
Un exemple est donné ci-après :

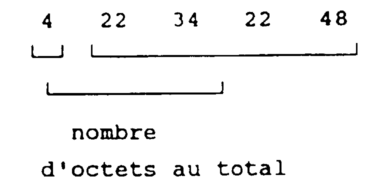

Une telle disposition signifie qu'il y a 2 impulsions de 0.4 ms et 2*4 ms d'attente avant l'octet "34", etc.

L'appareil de télécommande 8 et son fonctionnement vont maintenant être décrits plus précisément.

Trois tables sont téléchargées dans la mémoire de l'appareil de télécommande, à savoir :
- 1 table d'affichage (Table 5)
- 1 table de commande (Table 6)
- 1 table de programmation (Table 7)

La table d'affichage (Table 5) est identique à la table de codage (Table 1) du dispositif 4. Dans l'exemple décrit ici, c'est donc une matrice 9 lignes, 8 colonnes, indexées respectivement de 1 à 9 et de 1 à 8. A l'intérieur de cette matrice, se trouvent les différents caractères d'affichage disponibles (par exemple : l'entrée 11 contient le caractère "A", l'entrée 21 contient le caractère "B", etc...).

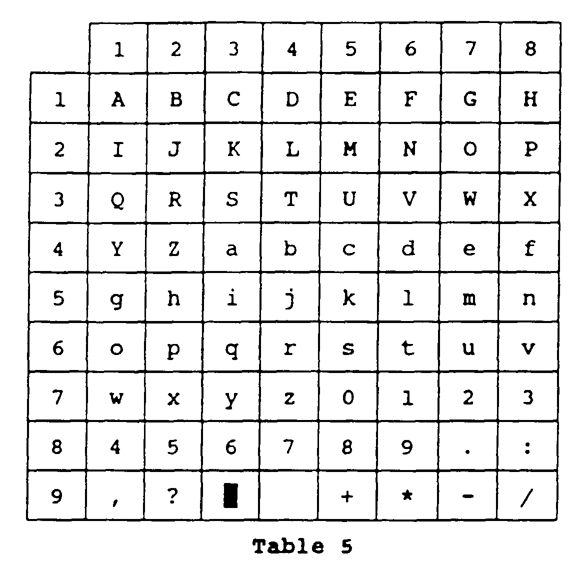

La table de commande (Table 6) est quant à elle composée de 3 colonnes.

La 1ère colonne donne l'index qui représente le numéro de la commande.

La 2ème colonne précise le code d'action de l'appareil de télécommande.

Le code d'action indique le type de commande dont il s'agit.

Ici, le code d'action peut avoir plusieurs valeurs :
"O": Aucune commande émise par l'appareil de télécommande
"1": Emission des coordonnées (x,y) de la sélection
"2": Emission d'un signal infrarouge local
   etc...

La 3ème colonne donne la commande émise de l'appareil 8 de télécommande vers le dispositif 4 ou vers un dispositif local télécommandable par infrarouge.

**Table 6**

| INDEX | CODE D'ACTION TELECOMMANDE | COMMANDE EMISE |
|---|---|---|
| 1 | 0 | - |
| 2 | 1 | 10 20 |
| 3 | 2 | 8 22 44 OB 44 22 32 18 64 |
| ... | ... | ... |

Enfin, la table de programmation (Table 7) associe la sélection d'une zone de l'écran à son index de commande correspondant. La zone de sélection est déterminée par les numéros de début et fin des cellules tactiles sur l'écran.

Par exemple : 01030303 1 signifie que, si l'utilisateur appuie sur n'importe quelle cellule tactile entre la cellule 0103 et la cellule 0303 alors la ligne n°1 de la table de commande sera exécutée.

**Table 7**

| CELLULES TACTILES | INDEX TABLE DE COMMANDE |
|---|---|
| 01030303 | 1 |
| 01040304 | 2 |
| ... | ... |

On va maintenant décrire un exemple d'application en référence aux figures 5a à 5f.

Selon l'invention, l'affichage de l'écran de l'appareil de télécommande est programmé par le dispositif 4 qui envoie des signaux à l'appareil de télécommande, correspondant d'une part aux données définissant le contenu de l'affichage, et d'autre part aux données spécifiant les coordonnées (X,Y) de la zone d'affichage à l'écran.

Par exemple, pendant le déroulement d'une action télématique, on souhaite pouvoir montrer quels sont les choix offerts à l'utilisateur.

Rappelons qu'avec l'invention, les données correspondantes à la fonctionnalité attachée à une zone tactile sont également transmises en temps réel ou équivalent à l'appareil 8 de télécommande.

Lorsque l'utilisateur touche la partie de l'écran tactile affichant un choix possible, cette sélection est alors transmise vers le dispositif extérieur pour être interprétée.

Dans le mode de réalisation plus particulièrement décrit ici, les fonctionnalités attachées à l'affichage sont par exemple de deux natures : d'une part, celles qui correspondent de façon connue en elle-même à des signaux infrarouges qui permettent de commander, entre autre, les différents appareils domestiques (Lecteurs interactifs, TV, magnétoscope, chaîne Hi-Fi, domotique, etc...) et d'autre part, celles qui concernent des programmes permettant une interactivité avec le serveur.

On décrit ci-après un exemple de configuration de l'appareil de télécommande en référence aux figures 6a à 6f.

A l'allumage de l'appareil 8 de télécommande, celui-ci émet un signal d'éveil 82 vers le dispositif 4 qui a son tour va émettre des données d'initialisation 83 telle que la date, l'heure, une chaîne de caractères de bienvenue et les caractères "PREFERENCES" (figure 6a).

L'utilisateur 2 appuie alors sur "PREFERENCES" ce qui émet un signal 84 vers le dispositif (figure 6b).

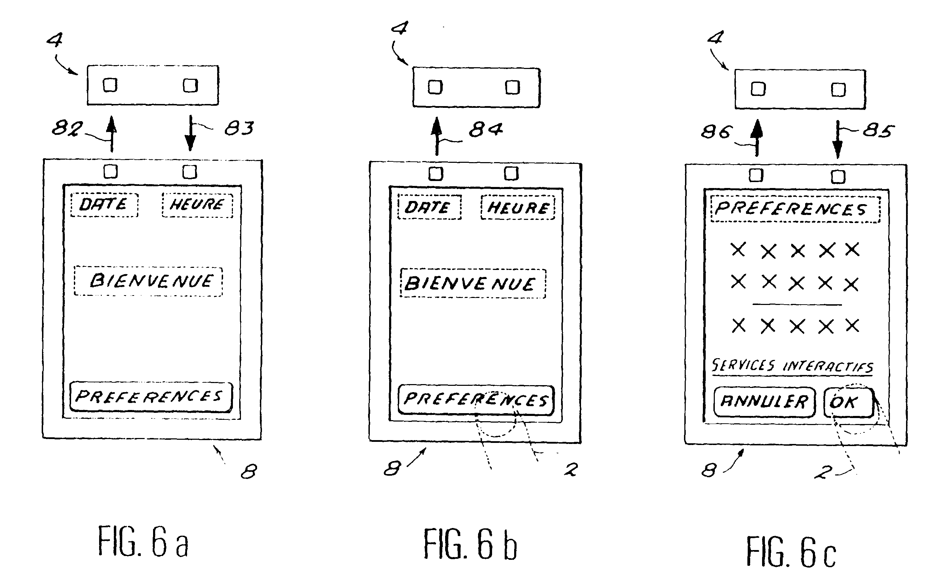

Le dispositif émet alors (voir figure 6c) (flèche 85) l'écran PREFERENCES avec, par exemple, les caractères "DATE", "HEURE", etc... ainsi que les préférences de configuration d'allumage mémorisées dans l'appareil.

Pour sélectionner ou désélectionner une préférence il suffit alors à l'utilisateur d'appuyer sur la chaîne de caractères de son choix (flèche 86).

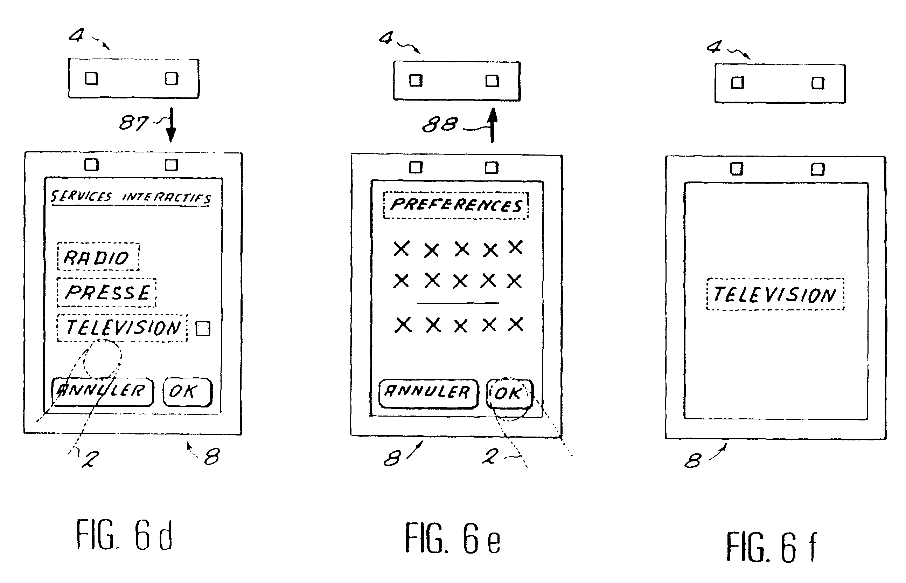

L'utilisateur ayant par exemple choisi "SERVICES INTERACTIFS", le dispositif (voir figure 6 d) émet (flèche 87) la liste des services interactifs disponibles. Le service "TELEVISION" est à son tour sélectionné.

L'utilisateur valide son choix (figure 6e) en appuyant sur "OK" (flèche 88) et revient à l'écran PREFERENCES ; l'opération de configuration est terminée, il peut maintenant appuyer à nouveau sur "OK" pour passer en mode de commande interactif avec le serveur (figure 6f).

Avantageusement, et au fur et à mesure que l'affichage et les instructions concernant les fonctions à remplir par les zones tactiles sont transmises du dispositif vers l'appareil de télécommande, celui-ci les met dans sa mémoire EEPROM 51. Ceci permet de minimiser l'interaction avec le boîtier en vue de la configuration d'autres préférences.

Comme on l'a vu, d'autres technologies d'écrans plats tels que les écrans à cristaux liquides peuvent être également utilisés.

## Revendications

1. Système (1) de dialogue interactif entre un utilisateur (2) et un ensemble de stockage de données brutes, comprenant un dispositif (4) d'interface propre à être connecté audit ensemble, ledit dispositif (4) comportant:
- des moyens de stockage (21, 23) et de traitement (18) des données brutes transmises par l'ensemble,
- des moyens d'émission (27, 28, 29, 30, 31, 32, 33) de signaux infrarouges ou de signaux radioélectriques à faible distance en fonction desdites données brutes transmises par l'ensemble (3) et traitées par le dispositif (4),
- des moyens (27, 28, 29, 30, 31, 32, 33) de réception de signaux infrarouges ou de signaux radioélectriques,
- des moyens de traitement des signaux reçus,
- et des moyens de transmission (34) des données correspondantes aux signaux ainsi traités vers ledit ensemble,
le système comprenant de plus un appareil (8) de télécommande portable comportant :
- des moyens (61, 62) de réception et d'émission de signaux infrarouges ou de signaux radioélectriques à faible distance,
- des moyens de stockage en mémoire à lecture/écriture des données correspondantes aux signaux émis par le dispositif et recus par l'appareil,
- des moyens d'affichage de messages comportant un écran (14), lesdits moyens d'affichage étant agencés pour représenter en temps réel, à des emplacements déterminés de l'écran, lesdites données correspondant aux signaux émis par le dispositif,
- et des moyens (13) de commande manuelle par l'utilisateur de l'émission de signaux infrarouges ou radioélectriques en retour, comprenant une plaque tactile (13) superposée à l'écran, agencée pour commander l'émission desdits signaux en retour par pression sur ladite plaque tactile à des emplacements déterminés et correspondant au message affiché,
caractérisé
en ce que l'ensemble de stockage de données appartient à au moins un serveur télématique (3),
en ce que l'appareil comporte un boîtier de dimension réduite,
en ce que les moyens d'émission (27, 28, 29, 30, 31, 32, 33) de signaux du dispositif sont agencés pour transmettre des instructions de commande à l'appareil, les moyens de stockage en mémoire à lecture/écriture de l'appareil étant agencés pour stocker lesdites instructions de commande,
et en ce que les moyens d'affichage de messages sont propres à représenter en temps réel, à des emplacements de l'écran déterminés par le dispositif, les messages issus desdites instructions de commande, et desdites données stockées dans ladite mémoire à lecture/écriture (52).

2. Système selon la revendication 1, caractérisé en ce que l'écran (14) est à cristaux liquides.

3. Système selon l'une quelconque des revendications précédentes, caractérisé en ce que la mémoire à lecture/écriture (52) est une mémoire RAM.

4. Système selon l'une quelconque des revendications précédentes, caractérisé en ce que il comporte des moyens d'interface vocale.

5. Système selon l'une quelconque des revendications précédentes, caractérisé en ce que les signaux sont des signaux infrarouges (10, 11).

6. Système selon l'une quelconque des revendications précédentes, caractérisé en ce que l'appareil comporte de plus des moyens (51) de stockage permanents de fonctions, propres à commander un lecteur interactif, un magnétoscope, un appareil de télévision, une chaîne haute fidélité, un appareil ménager ou équivalent.

7. Procédé de dialogue interactif entre un utilisateur (2) et un ensemble de stockage de premières données brutes, dans lequel on stocke et on traite les premières données brutes transmises par ledit ensemble dans un dispositif (4) d'interface connecté audit ensemble, et on transmet à l'ensemble, en réponse, des deuxièmes données brutes et/ou des instructions de commande venant de l'utilisateur, caractérisé en ce que l'ensemble de stockage des premières données brutes appartenant à un serveur, on télécharge à distance à partir dudit dispositif, par rayonnements infrarouges ou ondes radioélectriques, un appareil (8) de télécommande portable, muni d'un boîtier de dimension réduite et actionnable par l'utilisateur, en transmettant en même temps à l'appareil les premières données brutes traitées par le dispositif et des instructions de commande pour traitement desdites premières données brutes traitées par le dispositif,
on affiche automatiquement sur l'appareil, en temps réel, ou en temps différé via un stockage tampon dans l'appareil, et en fonction desdites instructions de commande téléchargées, des messages correspondants auxdites données et auxdites instructions de commande, et
on commande manuellement à partir de l'appareil l'émission de signaux infrarouges ou radioélectriques en réponse en appuyant à des emplacements dudit appareil déterminés par le dispositif et correspondants aux messages affichés.

8. Procédé selon la revendication 7, caractérisé en ce que on traite lesdits signaux recus dans le dispositif, émis à partir de l'appareil, avant de transmettre les informations correspondantes aux signaux ainsi traités vers le serveur.

9. Procédé selon la revendication 7 caractérisé en ce que on commande manuellement à partir de l'appareil un lecteur interactif, un magnétoscope, un appareil de télévision, une chaîne haute fidélité, un appareil ménager ou équivalent.

10. Procédé de dialogue interactif selon l'une quelconque des revendication 7 à 9, caractérisé en ce que la commande manuelle de l'émission de signaux infrarouges ou radioélectriques, est faite via une plaque tactile (13) superposée à l'écran (14), agencée pour commander l'émission desdits signaux par pression sur ladite plaque tactile à des emplacements déterminés par le dispositif et correspondant aux messages affichés.

11. Procédé selon l'une quelconque des revendications 7 à 10, caractérisé en ce que on stocke les données et les instructions correspondant aux signaux émis par le dispositif et reçus par l'appareil, dans ledit appareil, dans deux mémoires à lecture/écriture distinctes.

## Patentansprüche

1. System (1) zum interaktiven Dialog zwischen einem Benutzer (2) und einer Speicheranordnung für Ursprungsdaten, enthaltend eine Schnittstelleneinrichtung (4) zur Verbindung mit der Anordnung, wobei die Einrichtung (4) folgendes enthält:
- Mittel zur Speicherung (21, 23) und Verarbeitung (18) der durch die Anordnung übertragenen Ursprungsdaten,
- Mittel zum Aussenden (27, 28, 29, 30, 31, 32, 33) von Infrarotsignalen oder Hochfrequenzsignalen über eine geringe Entfemung als Funktion der durch die Anordnung (3) ausgesandten und durch die Einrichtung (4) verarbeiteten Ursprungsdaten,
- Mittel (27, 28, 29, 30, 31, 32, 33) zum Empfang der Infrarotsignale oder der Hochfrequenzsignale,
- Mittel zur Verarbeitung der empfangenen Signale, und
- Mittel zur Übertragung (34) der Daten, die den derart verarbeiteten Signalen entsprechen, zu der Anordnung,
wobei das System außerdem ein tragbares Fernbedienungsgerät (8) mit folgenden Merkmalen enthält:
- Mittel (61, 62) zum Empfang und zur Aussendung von Infrarotsignalen oder Hochfrequenzsignalen über eine geringe Entfernung,
- Speichermittel zum Lesen/Schreiben der Daten, die den durch die Einrichtung ausgesandten und durch das Gerät empfangenen Daten entsprechen,
- Mittel zur Anzeige von Nachrichten, enthaltend einen Schirm (14), wobei die Anzeigemittel dazu dienen, die den durch die Einrichtung ausgesandten Signalen entsprechenden Daten an vorbestimmten Stellen des Schirms in Echtzeit anzuzeigen, und
- Mittel (13) zur manuellen Steuerung der Aussendung von Infrarotsignalen oder Hochfrequenzsignalen in Rückrichtung durch den Benutzer, enthaltend eine über dem Schirm liegende Berührungsplatte (13) zum Steuern der Aussendung der Signale in Rückrichtung durch Drücken auf die Berührungsplatte an vorbestimmten und der angezeigten Nachricht entsprechenden Stellen,
**dadurch gekennzeichnet**,
**daß** die Speicheranordnung für die Daten zu wenigstens einem telematischen Surfer (3) gehört,
**daß** das Gerät ein Gehäuse mit verringerten Abmessungen enthält,
**daß** die Mittel (27, 28, 29, 30, 31, 32, 33) zur Aussendung der Signale der Einrichtung zum Übertragen von Steuerbefehlen zu dem Gerät und die Mittel zum Speichern mit Lesen/Schreiben des Gerätes zum Speichem der Steuerbefehle dienen, und
daß die Mittel zur Anzeige der Nachrichten in der Lage sind, die Nachrichten aus den Steuerbefehlen und die in dem Speicher zum Lesen/Schreiben (52) gespeicherten Daten in Echtzeit an durch die Einrichtung bestimmten Stellen des Schirms darzustellen.

2. System nach Anspruch 1,
**dadurch gekennzeichnet,**
**daß** der Schirm (14) ein Flüssigkristallschirm ist.

3. System nach einem der vorangehenden Ansprüche,
**dadurch gekennzeichnet**,
**daß** der Speicher zum Lesen/Schreiben (52) ein RAM ist.

4. System nach einem der vorangehenden Ansprüche,
**dadurch gekennzeichnet**,
**daß** es Schnittstellenmittel mit Sprachausgabe enthält.

5. System nach einem der vorangehenden Ansprüche,
**dadurch gekennzeichnet**,
**daß** die Signale Infrarotsignale (10, 11) sind.

6. System nach einem der vorangehenden Ansprüche,
**dadurch gekennzeichnet**,
**daß** das Gerät zusätzlich Mittel (51) zur permanenten Speicherung von Funktionen enthält, die zur Steuerung eines interaktiven Lesers, eines Videorekorders, eines Fernsehgerätes, einer HiFi-Anlage, eines Küchengerätes oder dergleichen geeignet sind.

7. Verfahren zum interaktiven Dialog zwischen einem Benutzer (2) und einer Speicheranordnung für erste Ursprungsdaten, wobei die ersten durch die Anordnung übertragenen Ursprungsdaten in einer mit der Anordnung verbundenen Schnittstelleneinrichtung (4) gespeichert und verarbeitet werden und daraufhin von dem Benutzer kommende zweite Ursprungsdaten und/oder Steuerbefehle zu der Anordnung übertragen werden,
**dadurch gekennzeichnet**,
**daß** die Speicheranordnung für die ersten Ursprungsdaten zu einem Surfer gehört,
**daß** von der Einrichtung durch Infrarotstrahlen oder Hochfrequenzwellen ein tragbares Fernbedienungsgerät (8) ferngeladen wird,
**daß** ein Gehäuse mit verringerten Abmessungen aufweist und durch den Benutzer bedienbar ist, wobei gleichzeitig zu dem Gerät die ersten durch die Einrichtung verarbeiteten Ursprungsdaten und Steuerbefehle zur Verarbeitung der durch die Einrichtung verarbeiteten ersten Ursprungsdaten übertragen werden,
**daß** automatisch in Echtzeit oder mit Zeitverschiebung über einen Pufferspeicher in dem Gerät und in Abhängigkeit von den ferngeladenen Steuerbefehlen den Daten und den Steuerbefehlen entsprechende Nachrichten automatisch angezeigt werden, und
**daß** mit dem Gerät die Aussendung der Infrarotsignale oder der Hochfrequenzsignale daraufhin unter Auswertung der Speicherplätze des Gerätes manuell gesteuert wird, die durch die Einrichtung bestimmt sind und den angezeigten Nachrichten entsprechen.

8. Verfahren nach Anspruch 7,
**dadurch gekennzeichnet**,
**daß** die in der Einrichtung empfangenen, von dem Gerät gesendeten Signale verarbeitet werden, bevor die den derart verarbeiteten Signalen entsprechenden Informationen zu dem Surfer übertragen werden.

9. Verfahren nach Anspruch 7,
**dadurch gekennzeichnet**,
**daß** mit dem Gerät ein interaktiver Leser, ein Videorekorder, ein Fernsehgerät, eine HiFi-Anlage, ein Küchengerät oder dergl. manuell gesteuert wird.

10. Verfahren zum interaktiven Dialog nach einem der Ansprüche 7 bis 9,
**dadurch gekennzeichnet**,
**daß** die manuelle Steuerung der Aussendung der Infrarotsignale oder der Hochfrequenzsignale durch eine Berührungsplatte (13) erfolgt, die auf dem Schirm (14) liegt, und zur Steuerung der Aussendung der Signale durch einen Druck auf die Berührungsplatte an Stellen erfolgt, die durch die Einrichtung bestimmt sind und den angezeigten Nachrichten entsprechen.

11. Verfahren nach einem der Ansprüche 7 bis 10,
**dadurch gekennzeichnet**,
**daß** die Daten und die Befehle, die den durch die Einrichtung ausgesandten und durch das Gerät empfangenen Signalen entsprechen, in dem Gerät in zwei getrennten Lese/Schreib-Speichem gespeichert werden.

## Claims

1. System (1) for interactive dialogue between a user (2) and a storage assembly for raw data, comprising an interface device (4) suitable for being connected to said assembly, said device (4) comprising:
- means for storage (21, 23) and processing (18) of the raw data transmitted by the assembly,
- means (27, 28, 29, 30, 31, 32, 33) for sending infrared signals or radio signals over a short distance as a function of said raw data transmitted by the assembly (3) and processed by the device (4),
- means (27, 28, 29, 03, 31, 32, 33) for receiving infrared signals or radio signals,
- means for processing the signals received,
- and means for transmitting (34) the data corresponding to the signals thus processed to said assembly,
the system further comprising a portable remote control appliance (8) comprising:
- means (61, 62) for receiving and sending infrared signals or radio signals over a short distance,
- means for storage in read/write memory of the data corresponding to the signals emitted by the device and received by the appliance,
- message display means comprising a screen (14), said display means being arranged so as to represent in real time, in predetermined locations on the screen, said data corresponding to the signals sent by the device,
- and means (13) for manual control by the user of the sending of infrared or radio signals in return, comprising a touch-sensitive plate (13) superimposed on the screen, arranged so as to control the sending of said signals in return by pressing on said touch-sensitive plate at predetermined locations and corresponding to the message displayed,
characterised
in that the data storage assembly belongs to at least one data communications server (3),
in that the appliance comprises a housing of small dimensions,
in that the means (27, 28, 29, 30, 31, 32, 33) for sending signals from the device are arranged for transmitting control instructions to the appliance, the means for storage in read/write memory of the appliance being arranged so as to store said control instructions,
and in that the message display means are suitable for representing in real time, on locations on the screen determined by the device, the messages coming from said control instructions, and said data stored in said read/write memory (52).

2. System according to Claim 1, characterised in that the screen (14) is the liquid-crystal type.

3. System according to any one of the preceding claims, characterised in that the read/write memory (52) is a RAM memory.

4. System according to any one of the preceding claims, characterised in that it comprises voice interface means.

5. System according to any one of the preceding claims, characterised in that the signals are infrared signals (10, 11).

6. System according to any one of the preceding claims, characterised in that the appliance further comprises means (51) for the permanent storage of functions, suitable for controlling an interactive reader, a video recorder, a television set, a high-fidelity system, a domestic appliance or equivalent.

7. Method for interactive dialogue between a user (2) and an assembly for storing first raw data, in which the first raw data transmitted by said assembly are stored and processed in an interface device (4) connected to said assembly, and second raw data and/or control instructions coming from the user are transmitted to the assembly in response, characterised by the assembly for storing the first raw data belonging to a server, downloading remotely from said device, by infrared rays or radio waves, a portable remote-control appliance (8), provided with a housing of small dimensions and actuable by the user, while transmitting at the same time to the appliance the first raw data processed by the device and control instructions for processing said first raw data processed by the device,
automatically displaying on the appliance, in real time or in deferred time via a buffer store in the appliance, and as a function of said downloaded control instructions, messages corresponding to said data and to said control instructions, and
manually controlling from the appliance the sending of infrared or radio signals in response by pressing on locations of said appliance determined by the device and corresponding to the messages displayed.

8. Method according to Claim 7, characterised in that said signals received in the device, sent from the appliance, are processed before transmitting the information corresponding to the signals thus processed to the server.

9. Method according to Claim 7 characterised in that an interactive reader, a video recorder, a television set, a high-fidelity system, a domestic appliance or equivalent is manually controlled from the applicance.

10. Interactive dialogue method according to any one of Claims 7 to 9, characterised in that the manual control of the sending of infrared or radio signals is effected via a touch-sensitive plate (13) superimposed on the screen (14), arranged so as to control the sending of said signals by pressing on said touch-sensitive plate at locations determined by the device and corresponding to the messages displayed.

11. Method according to any one of Claims 7 to 10, characterised in that the data and the instructions corresponding to the signals sent by the device and received by the appliance are stored in said appliance, in two distinct read/write memories.
